# FASCICULE DE BREVET EUROPEEN

(11) **EP 2 066 895 B1**
(45) Date de publication et mention de la délivrance du brevet: **29.12.2010**
(21) Numéro de dépôt: 07858392.9
(22) Date de dépôt: 28.09.2007
(51) Int. Cl.: F02K 1/06

(54) **NACELLE DE RÉACTEUR D'AÉRONEF ET AÉRONEF COMPORTANT UNE TELLE NACELLE**
TRIEBWERKSGONDEL FÜR EIN FLUGZEUG UND FLUGZEUG MIT DERARTIGER GONDEL
JET ENGINE NACELLE FOR AN AIRCRAFT AND AIRCRAFT COMPRISING SUCH A NACELLE

(30) Priorité: 29.09.2006 FR 0608547
(43) Date de publication de la demande: 10.06.2009
(73) Titulaire: Airbus Operations, 31060 Toulouse (FR)
(72) Inventeur: BULIN, Guillaume, F-31700 Blagnac (FR); OBERLE, Patrick, F-82600 Verdun Sur Garonne (FR); SURPLY, Thierry, F-31700 Cornebarrieu (FR)
(74) Mandataire: Santarelli, Luc
(86) Numéro de dépôt international: PCT/FR2007/001595
(87) Numéro de publication internationale: WO 2008/040869

(56) Documents cités:
- EP-A1- 0 315 524
- FR-A1- 2 184 021
- US-A- 3 885 891
- US-A1- 2005 103 933

## Description

L'invention est relative à une nacelle de réacteur d'aéronef équipée d'un système à tuyère variable.

Les systèmes à tuyère variable ont été initialement développés pour des applications aéronautiques militaires.

Ces systèmes permettent d'améliorer de façon significative les performances thermodynamiques d'une turbomachine.

Traditionnellement, les turbomachines montées sur des avions de ligne ne sont pas équipées de système à tuyère variable.

En effet, les systèmes traditionnels à tuyère variable induisent des contraintes de dimensionnement très importantes qui sont directement liées au périmètre de la tuyère dont la section doit être modifiée.

Or, les turbomachines équipant les avions de ligne se caractérisent par des taux de dilution élevés sensiblement situés entre 4 et 8 et qui engendrent des diamètres de tuyère relativement importants.

Pour cette raison l'intégration sur des avions de ligne de systèmes à tuyère variable traditionnels risque d'augmenter de façon significative la complexité et la masse de la nacelle de réacteur, tout en détériorant les qualités aérodynamiques de l'ensemble propulsif, ce qui n'est pas acceptable.

Le document US 2005/103933 A1 décrit une nacelle de réacteur d'aéronef dans laquelle est installée un réacteur d'axe longitudinal, la nacelle comportant une paroi entourant de façon concentrique au moins partiellement le réacteur et définissant avec ce dernier un conduit annulaire d'écoulement interne de fluide qui présente, à une extrémité aval de la paroi de la nacelle, une section de passage de sortie d'écoulement, la nacelle comportant des moyens de déplacement, sur commande, d'une partie de la paroi de la nacelle, créant ainsi dans cette paroi au moins une ouverture par laquelle s'échappe naturellement une partie de l'écoulement qualifiée d'écoulement de bypass.

La présente invention a pour objet une nacelle de réacteur d'aéronef à haut taux de dilution conforme à la revendication 1.

En faisant varier la section de passage de sortie de l'écoulement par déplacement d'une partie de la paroi de la nacelle on réalise de façon simple et légère une tuyère à section variable sur une turbomachine à haut taux de dilution, voire à très haut taux de dilution.

En outre, le dispositif fluidique permet de canaliser le long de la face externe de la paroi de la nacelle tout ou partie de l'écoulement de fuite en utilisant un autre écoulement de fluide et ainsi de faire recoller à la paroi cet écoulement.

La canalisation de cet écoulement de fuite par l'autre écoulement de fluide ne nécessite donc pas de dispositif mécanique supplémentaire en plus de celui permettant de déplacer la partie de paroi aval de la nacelle.

L'écoulement ainsi redirigé sensiblement parallèlement au vecteur de poussée, dans le même sens que ce dernier, contribue à la poussée du réacteur et donc augmente l'efficacité du réacteur équipé d'un système à tuyère variable.

On notera que le but de l'invention n'est pas d'empêcher l'écoulement de fuite qui prend naissance lors de la création d'ouverture(s) dans la paroi de se produire, mais de contrôler cet écoulement, notamment sa direction, pour qu'il contribue à la poussée du réacteur.

En guidant cet écoulement on réduit significativement les pertes aérodynamiques : les phénomènes de turbulence sont fortement réduits, voire annulés, diminuant par là-même la traînée. Les performances aérodynamiques de l'ensemble propulsif sont donc améliorées.

Avec une turbomachine à haut taux de dilution, le diamètre de la soufflante est très important, si bien que la variation de la section de passage de sortie d'écoulement pouvant être engendrée est suffisamment importante pour avoir une forte incidence sur le comportement de la soufflante. L'efficacité du système propulsif est alors augmentée durant chaque phase de vol.

Par ailleurs, l'adaptation d'un système à tuyère variable sur des turbomachines montées sur avions de ligne permet de diminuer, dans les phases de vol à basses vitesses (décollage, approche et atterrissage), les vitesses d'éjection de l'air en aval de la turbomachine, diminuant d'autant les émissions sonores associées. Cet avantage est un paramètre déterminant dans le contexte aéronautique actuel où les contraintes acoustiques sont de plus en plus drastiques vis-à-vis des avions de ligne.

Un système à tuyère variable présente donc de nets avantages en termes de performances aérodynamiques et thermodynamiques lorsqu'il est intégré sur une turbomachine à haut, voire à très haut taux de dilution.

Selon une caractéristique, le dispositif fluidique comporte des moyens d'injection d'un fluide à haute énergie dans l'écoulement de fuite.

Ce dispositif fluidique est simple et efficace puisqu'il ne fait pas appel à des moyens mécaniques mobiles mais à des moyens fixes d'injection de fluide et l'énergie utilisée peut provenir de la nacelle elle-même (ex : air sous pression venant du réacteur).

Au moins un des paramètres thermodynamiques et aérodynamiques du fluide injecté permet de contrôler la direction donnée à l'écoulement de fuite et la quantité d'écoulement de fuite concernée par cette réorientation.

On notera que le ou les mêmes paramètres thermodynamiques et aérodynamiques peuvent être utilisés pour contrôler tant l'orientation de l'écoulement de fuite que la fraction de celui-ci qui est ainsi orientée.

Selon une caractéristique, le dispositif fluidique comporte au moins une tuyère d'injection d'un fluide à haute énergie dans l'écoulement de fuite.

Selon une caractéristique, ladite au moins une tuyère d'injection a une forme annulaire ou semi-annulaire.

Selon une caractéristique, ladite au moins une tuyère d'injection communique avec un canal d'amenée du fluide qui est au moins partiellement aménagé dans la paroi de la nacelle.

Selon une caractéristique, l'injection de fluide est effectuée de façon continue ou pulsée.

Selon une caractéristique, le dispositif comporte une surface incurvée, aménagée tangentiellement à l'extrémité débouchante des moyens d'injection, de façon à diriger l'écoulement de fuite le long de la face externe de la partie de paroi aval de la nacelle.

La surface incurvée (convexe) permet de dévier le jet de fluide à haute énergie injecté tangentiellement à cette surface.

Selon une caractéristique, les moyens d'injection sont agencés sur la face externe de la paroi de la nacelle.

Selon une caractéristique, le dispositif fluidique est agencé en amont de l'ouverture ou des ouvertures.

Selon une caractéristique, le dispositif fluidique est agencé en aval de l'ouverture ou des ouvertures.

Selon une caractéristique, la partie de paroi de la nacelle située en aval de ladite au moins une ouverture comprend un bord d'attaque profilé.

Selon une caractéristique, à l'intérieur du conduit annulaire, le réacteur a une face externe et la partie déplaçable de la paroi de nacelle a une face interne qui coopèrent l'une avec l'autre pour provoquer une variation de la section de passage de sortie d'écoulement lorsque ladite partie de paroi s'est déplacée.

Selon une caractéristique, la partie déplaçable de la paroi de la nacelle est une partie aval de cette paroi qui inclut le bord de fuite de celle-ci et qui est apte à se déplacer longitudinalement le long du conduit annulaire, par translation vers l'aval, entre une première position, dans laquelle aucune ouverture n'est créée, et une seconde position, dans laquelle la ou les ouvertures sont créées.

Le système de tuyère à translation est le système le moins pénalisant à intégrer sur un réacteur à fort taux de dilution en termes de complexité, de masse et de trainée aérodynamique. En effet, en utilisant ce système, la cinématique de la tuyère se réduit à une simple translation, selon l'axe du réacteur, de la partie arrière de la nacelle. En outre, les écoulements aérodynamiques interne et externe à la nacelle ne sont que peu perturbés en position repliée.

L'invention a également pour objet un aéronef comprenant au moins deux nacelles de réacteur, chaque nacelle étant conforme à au moins un des aspects de la nacelle brièvement décrits ci-dessus.

D'autres caractéristiques et avantages apparaitront au cours de la description qui va suivre, donnée uniquement à titre d'exemple non limitatif et faite en référence aux dessins annexés, sur lesquels :
- la figure 1 est une vue générale schématique d'un aéronef selon l'invention ;
- la figure 2 est une vue schématique en coupe longitudinale d'une nacelle d'aéronef selon un premier mode de réalisation de l'invention ;
- la figure 3 est une vue schématique partielle agrandie du dispositif fluidique 30 de la figure 2 ;
- les figures 4 et 5 sont des vues schématiques partielles d'un mécanisme de déplacement de la partie arrière de la paroi de la nacelle respectivement en positions repliée et étendue ;
- la figure 6 représente une vue schématique en coupe longitudinale d'une nacelle de réacteur d'aéronef selon un deuxième mode de réalisation de l'invention ;
- la figure 7 est une vue schématique agrandie d'une partie de la figure 6.

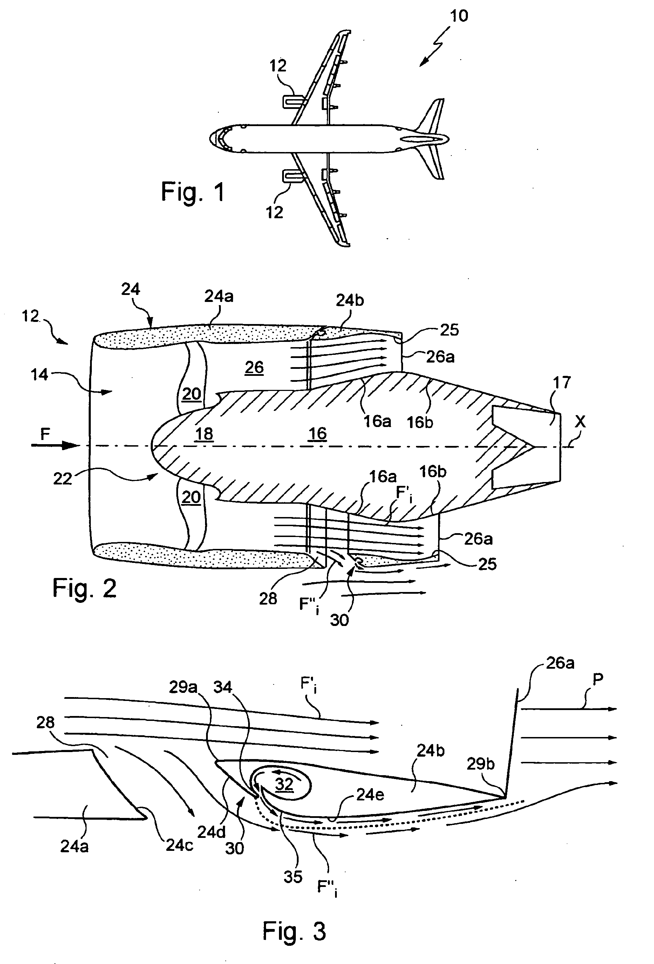

Comme représenté sur la figure 1 et désigné de façon générale par la référence notée 10, un aéronef commercial (avion de ligne) comporte plusieurs nacelles de réacteur 12 fixées sous la voilure principale de l'aéronef.

On dénombre par exemple sur l'aéronef 10 deux nacelles de réacteur fixées chacune à une des ailes latérales mais, selon les modèles d'aéronef, plusieurs nacelles peuvent être fixées à une même aile.

Par ailleurs, il peut être envisagé de fixer les nacelles de réacteur directement sur le fuselage, soit de part et d'autre du fuselage, soit sur la partie supérieure arrière du fuselage.

Comme représenté sur la figure 2, l'une des nacelles 12 selon l'invention est présentée de façon schématique en coupe longitudinale.

Un réacteur 14, d'axe longitudinal X, installé à l'intérieur de la nacelle comprend une turbomachine 16 comportant en entrée, du côté amont (à gauche sur la figure), un arbre 18 sur lequel sont montées les pales 20 d'une soufflante 22. La turbomachine est de type à double flux et à haut taux de dilution (taux supérieur ou égal à 5).

On notera que l'invention s'applique également à des turbomachines ayant un très haut taux de dilution (proche de 10).

La nacelle 12 entoure le réacteur 14 précité dans sa partie amont, tandis que sa partie aval fait saillie par rapport à la partie aval de la nacelle comme représenté partiellement sur la figure 2.

Plus particulièrement, la nacelle 12 comporte une paroi 24 qui entoure de façon concentrique le réacteur de façon à ménager avec ce dernier un conduit annulaire 26 dans lequel s'écoule un fluide qui, ici, est de l'air.

Comme représenté sur la figure 2, l'air, symbolisé par la flèche F arrivant en entrée de la nacelle, pénètre à l'intérieur de celle-ci et un premier flux, appelé flux primaire, pénètre dans la turbomachine 16 pour participer à la combustion et entraîner l'arbre 18 et donc la soufflante 22 en rotation. Ce flux primaire est ensuite éjecté par la tuyère 17 du moteur et contribue ainsi à une partie de la poussée de la turbomachine.

Un deuxième flux d'air, appelé flux secondaire, propulsé par l'hélice, emprunte le conduit annulaire 26 et s'échappe par la partie aval 26a de la nacelle, constituant ainsi la grande partie de la poussée du système propulsif.

Il convient de noter que la paroi 24 de la nacelle est réalisée en deux parties : une partie dite amont 24a réalisant le carénage aérodynamique de la partie avant de la turbomachine et une partie dite aval 24b incluant le bord de fuite de la paroi de la nacelle et qui est mobile en translation longitudinale (suivant la direction X) par rapport à la première partie fixe.

Comme représenté sur la figure 2, la seconde partie 24b est représentée en partie haute de cette figure, dans une première position dite repliée et pour laquelle l'écoulement interne Fi au conduit annulaire 26 traverse ce dernier jusqu'à son extrémité débouchante aval 26a. Cette position est utilisée dans des phases de vol où l'invention n'est pas mise en oeuvre.

On notera que la turbomachine 16 a une surface externe 16a dont le diamètre augmente au fur et à mesure de la progression le long du conduit 26 jusqu'à l'extrémité aval 26a (partie haute de la figure 2). La forme de la surface externe 16a de la turbomachine s'apparente à une portion de cône (forme tronconique) dont le sommet est situé vers l'amont.

La surface interne de la partie aval 24b présente, pour sa part, une diminution de diamètre le long du conduit dans la partie proche de l'extrémité aval 26a et jusqu'à celle-ci. La forme de cette partie 25 de la surface interne s'apparente à une portion de cône dont le sommet est situé vers l'aval.

La partie aval 24b de la paroi de la nacelle se déplace sur commande (par exemple à partir d'un signal envoyé du poste de pilotage), par translation continue ou non (par exemple sous l'action de vérins hydrauliques montés dans la partie de paroi 24a parallèlement à l'axe X), de la première position repliée à une seconde position dite déployée représentée en partie basse de la figure 2.

Dans la seconde position déployée, une ouverture radiale ou annulaire 28 est créée dans la paroi 24. Cette ouverture est aménagée entre les parties amont 24a et aval 24b à la périphérie externe du conduit annulaire 26.

Il convient de noter que la partie aval 24b de la paroi de la nacelle peut être constituée de plusieurs portions semi-annulaires (en forme de portions d'anneau) dont la réunion forme un anneau complet et qui peuvent se déplacer chacune de façon indépendante.

Le déplacement vers l'aval de chaque portion semi-annulaire crée ainsi une ouverture semi-annulaire différente dans la paroi de la nacelle.

Ce déplacement a pour but de faire varier la section de passage de sortie pour l'écoulement à l'intérieur de la tuyère définie par la face interne de la paroi aval 24b et la face externe en regard de la turbomachine 16.

Ainsi, lorsque la partie aval 24b s'est déplacée vers l'arrière, la section de passage de sortie pour l'écoulement de fluide à l'extrémité aval 26a est augmentée : un divergent se forme entre la partie 25 de la surface interne de la paroi aval 24b et la zone 16b de la surface externe de la turbomachine située en aval de la région de diamètre maximal. Il s'ensuit une variation du taux de détente de l'écoulement F'i qui induit une poussée maximale P.

On notera que la partie amont 24a et la partie aval 24b de la paroi de la nacelle présentent au niveau de leurs zones d'extrémité destinées à entrer en contact l'une avec l'autre des formes complémentaires, afin que l'ensemble constitué des deux parties soit jointif lorsqu'elles sont en contact l'une avec l'autre (partie haute de la figure 2).

Ainsi, les deux parties 24a et 24b présentent, à leurs zones d'extrémité en regard, deux faces inclinées respectives ayant chacune sensiblement une forme biseautée : la surface d'extrémité 24c de la partie avant 24a est inclinée vers l'intérieur du conduit annulaire, tandis que la surface d'extrémité 24d de la partie aval 24b est inclinée vers l'extérieur de la nacelle (figures 2 et 3).

Comme représenté en partie basse de la figure 2 et sur la figure 3, lorsque les deux faces d'extrémité 24c et 24d sont disjointes, elles bordent l'ouverture 28.

La face d'extrémité 24d est confondue avec la face externe 24e de la partie aval 24b au niveau de la jonction entre les deux parties 24a et 24b.

On notera que la partie aval 24b présente une pointe 29a profilée aérodynamiquement qui forme un bord d'attaque situé en aval de l'ouverture 28.

La partie aval 24b s'élargit vers l'aval à partir de ce bord d'attaque, puis se rétrécit au fur et à mesure que l'on se rapproche d'une pointe effilée 29b opposée au bord 29a et qui forme un bord de fuite.

Par ailleurs, une faible partie de l'écoulement interne du fluide circulant dans le conduit 26 peut s'échapper, naturellement, de façon radiale par cette ouverture.

Cette fraction d'écoulement est qualifiée d'écoulement de fuite et est notée Fi".

Un dispositif fluidique 30 est prévu dans la paroi de la nacelle pour contrôler cet écoulement de fuite Fi".

Comme représenté sur la figure 2 (et de façon plus détaillée sur la figure 3), le dispositif fluidique 30 est par exemple agencé dans la partie mobile 24b de la paroi de la nacelle, au niveau de la zone de jonction entre les parties 24a et 24b.

Le dispositif 30 est agencé sur la face externe 24e de la partie de paroi aval 24b de la nacelle et, plus particulièrement, sur la face d'extrémité 24d.

Le dispositif 30 comporte des moyens qui permettent d'injecter dans l'écoulement de fuite Fi" un fluide à haute énergie lorsque le ou les éléments mobiles de la nacelle se sont déplacés pour réaliser la variation de section de la tuyère à section variable.

Cette injection de fluide est effectuée de façon sensiblement tangentielle à la face externe 24e de la partie aval 24b.

Plus particulièrement, le dispositif fluidique 30 comporte, dans la portion la plus épaisse de la partie aval 24b, un canal d'amenée du fluide à haute énergie, qui est par exemple de l'air sous pression provenant du réacteur.

Ce canal d'amenée de fluide comporte une partie non représentée qui communique avec la source d'air sous pression de la turbomachine 16 ou avec un générateur auxiliaire d'énergie pneumatique (ex : compresseur).

Le canal comporte également une partie annulaire 32 partiellement représentée en coupe sur la figure 2. Ce canal 32 s'étend à la périphérie de l'ouverture 28 et est réalisé sous la forme d'un ou de plusieurs arcs de tore ou bien d'un tore complet agencé sur la face externe 24e de la partie de paroi arrière de la nacelle.

Le dispositif fluidique 30 comporte en outre une ou plusieurs tuyères d'injection 34 qui communiquent avec le canal 32 et débouchent sur la face externe 24e, permettant ainsi d'injecter dans l'écoulement de fuite Fi" le fluide à haute énergie (figure 3).

Une surface incurvée 35 est aménagée à la sortie de la tuyère d'injection 34, tangentiellement à cette dernière.

On notera que, lorsque le canal est réalisé sous la forme de sections toriques (arcs de tore) ou bien d'un tore complet, la tuyère peut prendre la forme d'une fente et s'étendre suivant toute la longueur de la section de tore (tuyère de forme semi-annulaire) ou du tore complet (tuyère de forme annulaire).

Pour une même section de tore ou pour le tore complet, il est également possible d'avoir plusieurs tuyères d'injection disjointes réparties sur la section considérée ou sur le tore.

Comme représenté sur les figures 2 et 3, le fluide sous pression véhiculé par le canal 32 est introduit sous la forme d'un jet dans l'écoulement de fuite Fi" par la tuyère d'injection 34, tangentiellement à la face externe 24e, et modifie ainsi de façon contrôlée une fraction de cet écoulement, voire la totalité de celui-ci

Le jet ainsi injecté sort de la tuyère avec une orientation donnée, tangentiellement à la surface incurvée 35, puis épouse la forme de cette surface (figure 3), dans la mesure où la force centrifuge qui tend à l'en décrocher est équilibrée par la dépression apparaissant entre la paroi et le jet.

Comme représenté sur la figure 3, une grande partie de l'écoulement de fuite Fi" est déviée de sa trajectoire sous l'action du jet injecté à travers la tuyère d'injection 34 et qui est lui-même dévié par la surface 35.

L'apport d'énergie du fluide injecté par la tuyère d'injection 34 permet de contrôler la direction du jet de fluide injecté.

L'orientation du jet, varie en fonction d'au moins un des paramètres thermodynamiques et aérodynamiques du fluide, à savoir par exemple la pression et/ou la température et/ou le débit et/ou la vitesse et/ou le taux de turbulence...

Le jet de fluide injecté par le dispositif fluidique permet de contrôler, par induction aérodynamique, l'écoulement de fuite Fi" en le dirigeant le long de la face externe 24e, comme représenté sur la figure 3, évitant ainsi les phénomènes de décollement qui sont susceptibles d'engendrer une traînée

L'écoulement Fi" ainsi réorienté de façon sensiblement parallèle au vecteur poussée P de la turbomachine, suit la face externe 24e de la partie aval 24b et rejoint, en aval du bord de fuite 29b, l'écoulement F'i qui constitue le vecteur poussée.

De cette façon, l'invention permet d'amplifier la poussée en jet direct en réutilisant tout ou partie de l'écoulement de fuite qui serait normalement perdu en l'absence de l'invention. On limite ainsi fortement les écoulements indésirables, de façon particulièrement simple et efficace.

Cette contribution avantageuse de l'écoulement de fuite au bilan global de poussée du réacteur permet d'augmenter le rendement général propulsif de la tuyère variable à translation.

A titre d'exemple, en choisissant un débit et une pression du fluide inducteur élevés, le jet de fluide adhère à la surface 35 et, de façon générale, à la totalité ou quasi-totalité de la face externe 24e et l'écoulement de fuite Fi" est ainsi dévié vers l'aval de la nacelle.

On notera que l'on peut modifier un seul des paramètres thermodynamiques et aérodynamiques, par exemple le débit, pour agir sur l'écoulement de fuite, tant pour contrôler l'orientation de cet écoulement que la quantité d'écoulement sur laquelle on agit.

En faisant varier la taille de l'orifice d'injection en sortie de la tuyère d'injection, par exemple, grâce à un agencement de type diaphragme, on peut faire varier la vitesse d'injection et donc le débit du fluide injecté.

Par ailleurs, lorsque le dispositif fluidique est activé, l'injection de fluide peut être réalisée soit en flux continu, soit en flux pulsé pour limiter la consommation de fluide injecté.

Il convient de noter que les efforts aérodynamiques liés au fonctionnement du dispositif selon l'invention se concentrent principalement sur le dispositif fluidique 30 agencé de façon annulaire sur la paroi de la nacelle, ce qui permet de mieux répartir dans la structure de la nacelle les efforts à transmettre et, ainsi, d'optimiser la géométrie et la masse de la structure de la nacelle.

Par ailleurs, l'intégration du dispositif fluidique sur la paroi de la nacelle n'a que très peu d'influence sur le traitement acoustique interne et externe de cette dernière.

En effet, dans la position repliée représentée en partie haute de la figure 2, le dispositif selon l'invention autorise l'intégration d'un revêtement acoustique pariétal sur la quasi-totalité des faces interne et externe de la paroi de la nacelle.

En outre, la taille du dispositif fluidique 30 est relativement petite ce qui facilite son intégration dans cette dernière.

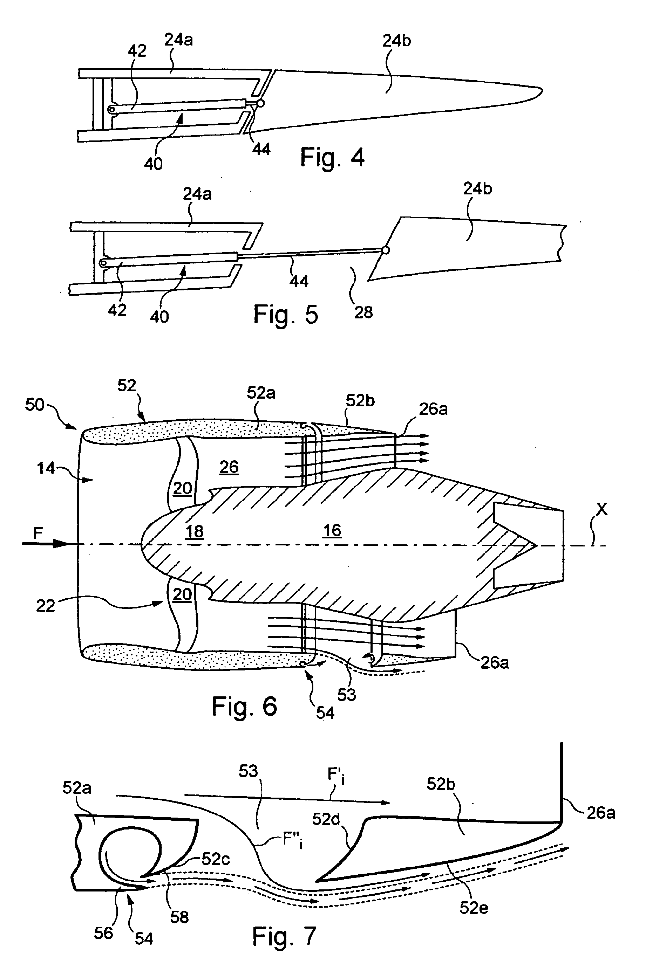

On a représenté sur la figure 4 un mode de réalisation d'un moyen de déplacement par translation de la partie arrière 24b de la paroi de la nacelle.

Un logement interne aménagé dans la partie amont 24a accueille un vérin à double effet 40, par exemple de type pneumatique ou hydraulique.

La partie fixe 42 ou corps du vérin est assujettie au fond du logement, tandis que la partie mobile 44 ou tige du vérin est fixée à la partie arrière 24b, dans une zone où le dispositif fluidique 30 n'est pas présent.

Il est toutefois possible d'envisager une fixation même si le dispositif 30 s'étend sur toute la périphérie de la partie arrière 24b.

Sur cette figure, la partie arrière 24b n'est pas translatée et est agencée contre la partie avant 24a en position repliée (vérin rétracté).

Sur la figure 5, la sortie de la tige 44 du vérin est commandée et la partie arrière 24b se déploie, créant ainsi l'ouverture 28 dans la paroi de la nacelle, à partir de la jonction entre les parties amont 24a et aval 24b.

On notera que plusieurs vérins de ce type sont par exemple aménagés sur la circonférence de la partie de paroi amont 24a pour translater efficacement la partie arrière.

L'invention s'applique également à des turbomachines à haut ou à très haut taux de dilution équipées de tuyères à section variable qui ne sont pas du type à translation.

On notera qu'une tuyère à section variable équipant de telles turbomachines permet de s'adapter aux différentes phases de fonctionnement de l'avion (vol de croisière, basse vitesse).

La nacelle 50 des figures 6 et 7 illustre un autre mode de réalisation de l'invention dans lequel les éléments inchangés par rapport à la nacelle 12 de la figure 2 conservent les mêmes références.

La nacelle 50 diffère de la nacelle 12, d'une part, par le positionnement du dispositif fluidique en amont de la zone de jonction entre les parties de paroi de la nacelle amont et aval et, d'autre part, par la forme des faces d'extrémité en regard de ces parties.

Comme représenté sur les figures 6 et 7, la paroi de nacelle 52 comporte une partie amont 52a dont la face d'extrémité 52c est convexe et tournée vers l'extérieur de la nacelle, et une partie aval 52b dont la face d'extrémité est concave et tournée vers le conduit annulaire 26.

Lorsque les deux parties sont écartées l'une de l'autre, une ou plusieurs ouvertures radiales 53 sont ainsi formées entre elles.

Le dispositif fluidique 54 est logé dans la partie amont 52a (en amont de l'ouverture) et les moyens d'injection 56 (tuyère d'injection) sont disposés sur la face externe de la partie amont de la paroi de la nacelle. Plus particulièrement, les moyens 56 sont prévus sur la face d'extrémité 52c qui est confondue avec la face externe de la partie avant 52a au niveau de la zone de jonction entre les parties 52a et 52b.

Le jet de fluide à haute énergie injecté par la tuyère 56 suit la surface incurvée 58 tangentielle à l'extrémité débouchante de cette tuyère, sur une distance plus ou moins grande selon l'effet d'induction aérodynamique souhaité.

En fonction de l'énergie du fluide injecté (cette énergie est ajustée grâce à la valeur choisie d'au moins un des paramètres thermodynamiques et aérodynamiques du fluide) on contrôle cette distance et donc la position du point de la surface incurvée 58 où le jet se sépare de cette surface.

De ce fait, la direction du jet de fluide est contrôlée.

Dans la configuration des figures 6 et 7, cette distance est courte et le jet se détache très rapidement de la surface pour venir rencontrer l'écoulement de fuite Fi" et modifier sa trajectoire.

Ainsi, le jet de fluide orienté de façon contrôlée dévie la direction de l'écoulement Fi" de façon également controlée et force ce dernier à suivre la face externe 52e de la partie aval 52b de la paroi de la nacelle.

L'écoulement de fuite est ainsi canalisé le long de cette face, parallèlement au vecteur poussée de turbomachine, et réinjecté, en aval de l'extrémité 26a, dans l'écoulement F'i qui constitue la poussée.

L'intégration de systèmes à tuyère variable sur des turbomachines à haut taux de dilution en améliore significativement les performances thermodynamiques.

En effet, sur les turbomachines montées sur avions de ligne et ayant des taux de dilution très élevés (proches de 10), le taux de compression de la soufflante, principal contributeur à la poussée totale de la turbomachine, est faible (aux alentours de 1,4). Il s'ensuit une augmentation de la sensibilité des performances aérodynamiques de cette soufflante vis-à-vis de la vitesse de vol de l'avion (vitesse sonique).

Dans le cas d'une turbomachine à très haut taux de dilution non équipée de système à tuyère variable, le choix de la ligne de fonctionnement aérodynamique de la soufflante est un compromis entre l'efficacité aérodynamique en vol de croisière et la marge au pompage (phénomènes instationnaires préjudiciables à l'intégrité du moteur) aux basses vitesses de vol.

Dans le cas d'une turbomachine à très haut taux de dilution équipée cette fois-ci d'un système à tuyère variable, un tel compromis n'est pas nécessaire du fait de l'adaptation de la section de sortie de la tuyère au régime de fonctionnement de la soufflante. L'efficacité en est alors augmentée dans chaque phase de vol.

## Revendications

1. Nacelle (12) de réacteur d'aéronef à haut taux de dilution dans laquelle est installé un réacteur (16) d'axe longitudinal (X), la nacelle comportant une paroi (24) entourant de façon concentrique au moins partiellement le réacteur et définissant avec ce dernier un conduit annulaire (26) d'écoulement interne de fluide qui présente, à une extrémité dite aval (26a) de la paroi de la nacelle, une section de passage de sortie d'écoulement, **caractérisée en ce que** la nacelle comporte des moyens de déplacement (42), sur commande, d'une partie (24b) de la paroi de la nacelle pour faire varier la section de passage de sortie d'écoulement par laquelle s'échappe la majeure partie de l'écoulement (Fi'), ce déplacement créant dans la paroi de la nacelle au moins une ouverture (28 ; 53) par laquelle s'échappe naturellement une faible partie de l'écoulement qualifiée d'écoulement de fuite (Fi "), la nacelle comportant un dispositif fluidique (30 ; 54) faisant intervenir un autre écoulement de fluide pour forcer l'écoulement de fuite à s'écouler le long de la face externe (24e) de la partie de paroi de la nacelle située en aval de ladite au moins une ouverture.

2. Nacelle selon la revendication 1, **caractérisée en ce que** le dispositif fluidique comporte des moyens d'injection (34 ; 56) d'un fluide à haute énergie dans l'écoulement de fuite.

3. Nacelle selon la revendication 2, **caractérisée en ce que** les moyens d'injection comportent au moins une tuyère d'injection (34 ; 56) d'un fluide à haute énergie dans l'écoulement de fuite.

4. Nacelle selon la revendication 3, **caractérisée en ce que** ladite au moins une tuyère d'injection a une forme annulaire ou semi-annulaire.

5. Nacelle selon la revendication 3 ou 4, **caractérisée en ce que** ladite au moins une tuyère d'injection communique avec un canal (32) d'amenée du fluide qui est au moins partiellement aménagé dans la paroi de la nacelle.

6. Nacelle selon l'une des revendications 2 à 5, **caractérisée en ce que** l'injection d'un fluide à haute énergie dans l'écoulement de fuite est effectuée de façon continue ou pulsée.

7. Nacelle selon l'une des revendications 2 à 6, **caractérisée en ce que** le dispositif fluidique comporte une surface incurvée (35), aménagée tangentiellement à l'extrémité débouchante des moyens d'injection, de façon à diriger l'écoulement de fuite le long de la face externe (24e) de la partie de paroi aval de la nacelle.

8. Nacelle selon l'une des revendications 2 à 7, **caractérisée en ce que** les moyens d'injection sont agencés sur la face externe de la paroi de la nacelle.

9. Nacelle selon l'une des revendications 1 à 8, **caractérisée en ce que** le dispositif fluidique (54) est agencé en amont de ladite au moins une ouverture (53).

10. Nacelle selon l'une des revendications 1 à 8, **caractérisée en ce que** le dispositif fluidique (30) est agencé en aval de ladite au moins une ouverture (28).

11. Nacelle selon l'une des revendications 1 à 10, **caractérisée en ce que** la partie de paroi de la nacelle située en aval de ladite au moins une ouverture comprend un bord d'attaque profilé (29a).

12. Nacelle selon l'une des revendications 1 à 11, **caractérisée en ce que**, à l'intérieur du conduit annulaire, le réacteur a une face externe (16a ; 16b) et la partie déplaçable (24b) de la paroi de nacelle a une face interne (25) qui coopèrent l'une avec l'autre pour provoquer une variation de la section de passage de sortie d'écoulement lorsque ladite partie de paroi s'est déplacée.

13. Nacelle selon l'une des revendications 1 à 12, **caractérisée en ce que** la partie déplaçable (24b) de la paroi de la nacelle est une partie aval de cette paroi qui inclut le bord de fuite (29b) de celle-ci et qui est apte à se déplacer longitudinalement le long du conduit annulaire, par translation vers l'aval, entre une première position, dans laquelle aucune ouverture n'est créée, et une seconde position, dans laquelle la ou les ouvertures sont créées.

14. Aéronef comprenant au moins deux nacelles de réacteur, chaque nacelle étant conforme à l'une des revendications 1 à 13.

## Claims

1. An aircraft engine nacelle (12) having high bypass ratio, wherein there is installed an engine (16) with a longitudinal axis (X), the nacelle having a wall (24) that concentrically surrounds the engine at least partly and that defines therewith an annular internal fluid flow conduit (26), which at a downstream end (26a) of the nacelle wall has a flow-outlet passage section, **characterized in that** the nacelle comprises means (42) for displacement, on command, of a part (24b) of the nacelle wall in order to vary the flow-outlet passage section via which the major part of the flow (Fi') escapes, this displacement creating, in the nacelle wall, at least one aperture (28; 53) via which there naturally escapes a small part of the flow, referred to as leakage flow (Fi"), the nacelle comprising a fluidic device (30; 54) utilizing another fluid flow to force the leakage flow to pass along the outer surface (24e) of the part of the nacelle wall situated downstream from the said at least one aperture.

2. A nacelle according to claim 1, **characterized in that** the fluidic device comprises means (34; 56) for injection of a high-energy fluid into the leakage flow.

3. A nacelle according to claim 2, **characterized in that** the injection means comprise at least one nozzle (34; 56) for injecting a high-energy fluid into the leakage flow.

4. A nacelle according to claim 3, **characterized in that** the said at least one injection nozzle has an annular or semi-annular shape.

5. A nacelle according to claim 3 or 4, **characterized in that** the said at least one injection nozzle communicates with a fluid supply duct (32) that is provided at least partly in the nacelle wall.

6. A nacelle according to one of claims 2 to 5, **characterized in that** the injection of a high-energy fluid into the leakage flow is performed in continuous or pulsed manner.

7. A nacelle according to one of claims 2 to 6, **characterized in that** the fluidic device comprises a curved surface (35), provided tangentially at the discharging end of the injection means, in such a way as to direct the leakage flow along the outer surface (24e) of the downstream part of the nacelle wall.

8. A nacelle according to one of claims 2 to 7, **characterized in that** the injection means are mounted on the outer surface of the nacelle wall.

9. A nacelle according to one of claims 1 to 8, **characterized in that** the fluidic device (54) is disposed upstream from the said at least one aperture (53).

10. A nacelle according to one of claims 1 to 8, **characterized in that** the fluidic device (30) is disposed downstream from the said at least one aperture (28).

11. A nacelle according to one of claims 1 to 10, **characterized in that** the part of the nacelle wall situated downstream from the said at least one aperture comprises a profiled leading edge (29a).

12. A nacelle according to one of claims 1 to 11, **characterized in that**, inside the annular conduit, the engine has an outer surface (16a; 16b) and the displaceable part (24b) of the nacelle wall has an inner face (25), that cooperate with one another to cause variation of the flow-outlet passage section when the said wall part is displaced.

13. A nacelle according to one of claims 1 to 12, **characterized in that** the displaceable part (24b) of the nacelle wall is a downstream part of this wall that includes the trailing edge (29b) thereof and that is capable of being displaced longitudinally along the annular conduit, by translation in the downstream direction, between a first position, in which no aperture is created, and a second position, in which the aperture or apertures are created.

14. An aircraft comprising at least two engine nacelles, each nacelle being in accordance with one of claims 1 to 13.

## Patentansprüche

1. Gondel (12) eines Flugzeugtriebwerks mit hohem Verdünnungsverhältnis, in der ein Triebwerk (16) mit Längsachse (X) installiert ist, wobei die Gondel eine Wand (24) umfasst, die konzentrisch mindestens teilweise das Triebwerk umgibt und mit diesem einen ringförmigen Kanal (26) für die innere Fluidströmung abgrenzt, der an einem sogenannten stromab gelegenen Ende (26a) der Wand der Gondel einen Strömungs-Ausgangsdurchgangsquerschnitt aufweist, **dadurch gekennzeichnet, dass** die Gondel Mittel (42) zur Bewegung eines Teils (24b) der Wand der Gondel auf Befehl umfasst, um den Strömungs-Ausgangsdurchgangsquerschnitt, durch den der größte Teil der Strömung (Fi') austritt, zu ändern, wobei diese Bewegung in der Wand der Gondel mindestens eine Öffnung (28; 53) erzeugt, durch die von selbst ein kleiner Teil der Strömung, als Leckströmung (Fi") bezeichnet, austritt, wobei die Gondel eine Fluidvorrichtung (30; 54) umfasst, die eine andere Fluidströmung eingreifen lässt, um die Leckströmung zu zwingen, längs der Außenseite (24e) des stromab von dieser mindestens einen Öffnung gelegenen Teils der Wand der Gondel zu fließen.

2. Gondel nach Anspruch 1, **dadurch gekennzeichnet, dass** die Fluidvorrichtung Mittel (34; 56) zum Einspritzen eines Fluids hoher Energie in die Leckströmung umfasst.

3. Gondel nach Anspruch 2, **dadurch gekennzeichnet, dass** die Einspritzmittel mindestens eine Düse (34; 56) zum Einspritzen eines Fluids hoher Energie in die Leckströmung umfassen.

4. Gondel nach Anspruch 3, **dadurch gekennzeichnet, dass** die mindestens eine Einspritzdüse eine Ring- oder Halbringform besitzt.

5. Gondel nach Anspruch 3 oder 4, **dadurch gekennzeichnet, dass** die mindestens eine Einspritzdüse mit einem Kanal (32) zur Zufuhr des Fluids in Verbindung ist, der mindestens teilweise in der Wand der Gondel ausgespart ist.

6. Gondel nach einem der Ansprüche 2 bis 5, **dadurch gekennzeichnet, dass** die Einspritzung eines Fluids hoher Energie in die Leckströmung kontinuierlich oder gepulst durchgeführt wird.

7. Gondel nach einem der Ansprüche 2 bis 6, **dadurch gekennzeichnet, dass** die Fluidvorrichtung eine gekrümmte Fläche (35) umfasst, die tangential am ausmündenden Ende der Einspritzmittel vorgesehen ist, so dass die Leckströmung längs der Außenseite (24e) des stromab gelegenen Wandteils der Gondel geleitet wird.

8. Gondel nach einem der Ansprüche 2 bis 7, **dadurch gekennzeichnet, dass** die Einspritzmittel auf der Außenseite der Wand der Gondel angeordnet sind.

9. Gondel nach einem der Ansprüche 1 bis 8, **dadurch gekennzeichnet, dass** die Fluidvorrichtung (54) stromauf der mindestens einen Öffnung (53) angeordnet ist.

10. Gondel nach einem der Ansprüche 1 bis 8, **dadurch gekennzeichnet, dass** die Fluidvorrichtung (30) stromab der mindestens einen Öffnung angeordnet ist.

11. Gondel nach einem der Ansprüche 1 bis 10, **dadurch gekennzeichnet, dass** der stromab der mindestens einen Öffnung gelegenen Wandteil der Gondel eine profilierte Eintrittskante (29a) umfasst.

12. Gondel nach einem der Ansprüche 1 bis 11, **dadurch gekennzeichnet, dass** das Triebwerk im Inneren des ringförmigen Kanals eine Außenseite (16a; 16b) aufweist und der bewegliche Teil (24b) der Gondelwand eine Innenseite (25) aufweist, die miteinander zusammenarbeiten, um eine Änderung des Strömungs-Ausgangsdurchgangsquerschnitts zu bewirken, wenn dieser Wandteil bewegt wird.

13. Gondel nach einem der Ansprüche 1 bis 12, **dadurch gekennzeichnet, dass** der bewegliche Teil (24b) der Wand der Gondel ein stromab gelegener Teil dieser Wand ist, der deren Austrittskante (29b) einschließt und der in der Lage ist, sich in Längsrichtung längs des ringförmigen Kanals durch Translation nach stromab zwischen einer ersten Stellung, in der keine Öffnung erzeugt ist, und einer zweiten Stellung zu bewegen, in der die Öffnung oder die Öffnungen erzeugt sind.

14. Flugzeug, das mindestens zwei Triebwerksgondeln umfasst, wobei jede Gondel gemäß einem der Ansprüche 1 bis 13 ist.
